# EUROPÄISCHE PATENTSCHRIFT

(11) **EP 1 621 743 B1**
(45) Veröffentlichungstag und Bekanntmachung des Hinweises auf die Patenterteilung: **19.03.2008**
(21) Anmeldenummer: 05015519.1
(22) Anmeldetag: 18.07.2005
(51) Int. Cl.: F02C 7/04, F04D 29/42

(54) **Einströmgehäuse für axiale Strömungsmaschinen**
Inlet housing for axial turbomachines
Carter d'admission pour turbomachines

(30) Priorität: 27.07.2004 DE 102004036331
(43) Veröffentlichungstag der Anmeldung: 01.02.2006
(73) Patentinhaber: MAN TURBO AG, 46145 Oberhausen (DE)
(72) Erfinder: Wiedermann, Alexander, Dr., 46569 Hünxe (DE); Böhle, Martin, Prof. Dr., 42097 Wuppertal (DE)
(74) Vertreter: Radünz, Ingo

(56) Entgegenhaltungen:
- EP-A- 0 385 294
- EP-A- 0 959 231
- DE-A1- 4 426 522
- GB-A- 805 003
- SU-A1- 1 430 609
- US-A- 5 257 906

## Beschreibung

Die Erfindung betrifft ein Einströmgehäuse für axiale Strömungsmaschinen, insbesondere für Axialkompressoren mit den Merkmalen des Oberbegriffes des Anspruches 1.

Einströmgehäuse von Industriegasturbinen sind anders konzipiert als Einlässe von Flugtriebwerken, die mehr oder weniger frei von allen Seiten gleichmäßig axial angeströmt werden können. Dagegen befinden sich Industriegasturbinen an Rahmen befestigt in Gebäuden oder Schallschutzvorrichtungen. Die Luft wird über einen Ansaugschacht im Dachbereich angesaugt, dann durch einen meist senkrechten Verbindungskanal auf das Höhenniveau der Gasturbine befördert. Schließlich muss die angesaugte Luft wieder in axiale Richtung umgelenkt werden, damit die Luft möglichst in Umfangsrichtung gleichgerichtet in den Kompressor einströmen kann, um dessen Stabilität nicht zu gefährden. Solche Einläufe werden üblicherweise in Anlehnung an veröffentlichte Korrelationen ausgeführt, die sich allerdings nur auf die axiale Zuführung zum Kompressor konzentrieren. Um die umgelenkte Strömung so gut wie möglich in Umfangsrichtung zu vergleichmäßigen, wird entweder die Einlaufstrecke besonders lang ausgeführt, oder der senkrechte Teil des Ansaugschachtes wird sehr breit und tief gebaut. Dadurch werden die Länge der gesamten Gasturbine und auch die von der Luft benetzten Oberflächen sehr groß.

Aus der GB 805 003 A ist ein Einströmgehäuse für axiale oder radiale Strömungsmaschinen bekannt. Das Einströmgehäuse besteht aus einem Ansaugschacht mit einem einseitigen, radialen Einlauf und aus einem axialen Einlaufkonus, der zusammen mit einem mit einer Eintrittskante in den Ansaugschacht hineinragenden Mantel ein axiales Strömungsteil bildet, das mit dem Eintrittsquerschnitt der Strömungsmaschine in Verbindung steht. Um die umgelenkte Strömung zu vergleichmäßigen, ist der Einlaufkonus asymmetrisch zur Rotationsachse der Strömungsmaschine gestaltet. Außerdem weist der Einlaufkonus in seinem dem einseitigen Einlass des Ansaugschachtes zugewandten Teil entweder eine größere Länge oder ein geringeres Volumen auf als in dem dem Einlass abgewandten Teil. Rotationsasymmetrische Bauteile, wie der Einlaufkonus der bekannten Strömungsmaschine lassen sich nur schwierig herstellen und montieren.

Der Erfindung liegt die Aufgabe zugrunde, das gattungsgemäße Einströmgehäuse von axialen Strömungsmaschinen derart zu gestalten, dass die axiale Baulänge der Strömungsmaschine verkürzt wird.

Die Aufgabe wird bei einer gattungsgemäßen Strömungsmaschine erfindungsgemäß durch die kennzeichnenden Merkmale des Anspruches 1 gelöst. Vorteilhafte Ausgestaltungen der Erfindung sind Gegenstand der Unteransprüche.

Durch ein die Blende bildendes, nicht rotationssymmetrisches Blech wird das radial zuströmende gasförmige Medium derart aufgeteilt, dass das Medium gleichmäßig über den Umfang verteilt in den zur Strömungsmaschine führenden axialen Strömungsteil einströmt. Auf diese Weise kann gegenüber den bekannten Einlaufgehäusen die Einlaufstrecke verkürzt und das Volumen des senkrechten Teiles des Ansaugschachtes verkleinert werden. Das wirkt sich darin aus, dass die axiale Baulänge der Strömungsmaschine wesentlich verkürzt werden kann.

Ein Ausführungsbeispiel der Erfindung ist in der Zeichnung dargestellt und wird im Folgenden näher erläutert. Es zeigen:

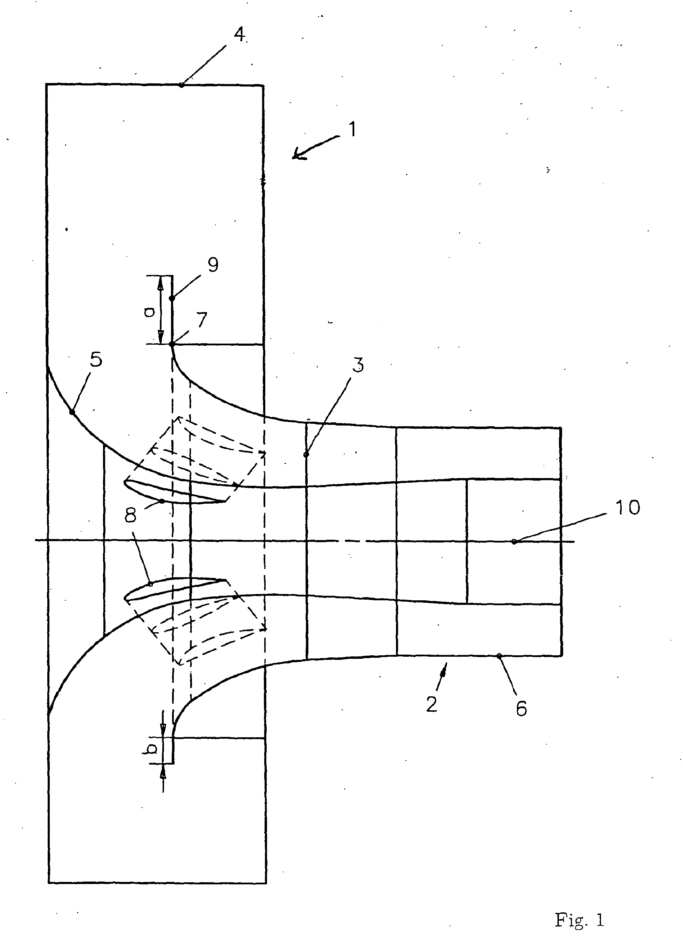

- Fig. 1: den Längsschnitt durch einen Ansaugschacht einer axialen Strömungsmaschine und

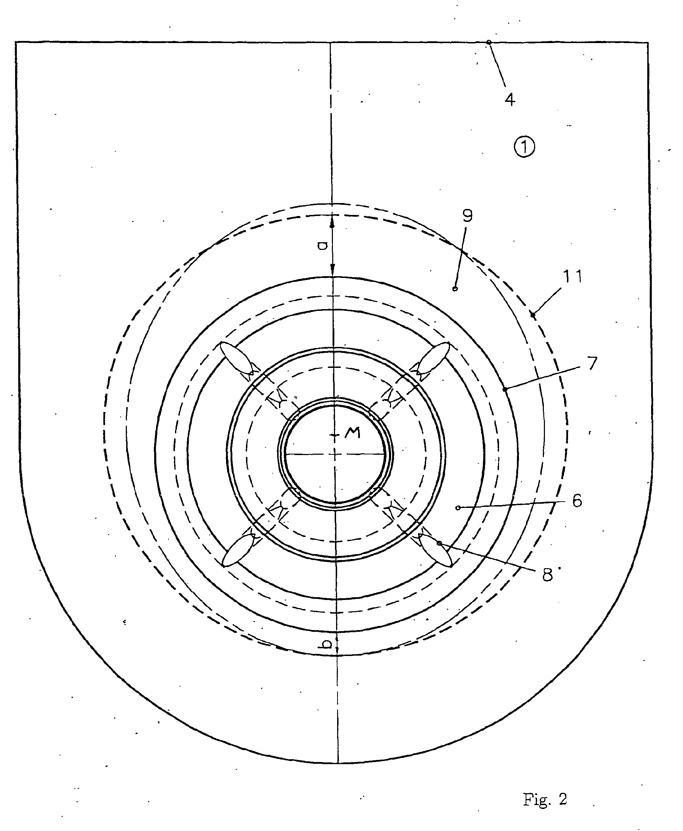

- Fig. 2: die Seitenansicht zu Fig. 1.

Einer axialen Strömungsmaschine, die ein axialer Prozesskompressor oder der axiale Luftverdichter einer Industriegasturbine sein kann, wird Gas oder Luft durch den Ansaugschacht 1 eines Einströmgehäuses und einen axialen Strömungsteil 2 zugeführt. Dabei weist der axiale Strömungsteil 2 einen ringförmigen, rotationssymmetrischen Querschnitt auf und steht mit dem Eintrittsquerschnitt der nicht gezeigten axialen Strömungsmaschine in Verbindung. In der Ebene 3 befindet sich innerhalb des Strömungsteiles 2 die Eintrittskante des Vorleitrades der Strömungsmaschine.

Der Ansaugschacht 1 ist einseitig geöffnet und weist einen radialen Einlauf 4 auf. An der Rückwand des Ansaugschachtes 1 ist in Verlängerung der Achse 10 des axialen Strömungsteiles 2 ein sich verjüngender Einlaufkonus 5 befestigt, der zusammen mit einem Mantel 6 den axialen Strömungsteil 2 bildet. Der Strömungsteil 2 ragt mit seiner Eintrittskante 7 in den Ansaugschacht 1 hinein, wodurch ein rotationssymmetrischer Ansaugmund gebildet wird. Innerhalb des Ansaugmundes sind auf dem Einlaufkonus 5 Strömungsleitflächen 8 angebracht.

An der Eintrittskante 7 des Mantels 6 ist eine ringförmige Blende 9 in Form eines nicht rotationssymmetrischen Bleches befestigt. Die Blende 9 ist senkrecht zur horizontalen Achse 10 des axialen Strömungsteiles 2 ausgerichtet. Dabei ist die Blende 9 senkrecht zur horizontalen Achse 10 des axialen Strömungsteiles 2 spiegelsymmetrisch ausgebildet. In Richtung der Achse 10 des axialen Strömungsteiles 2 ist die Blende 9 unsymmetrisch.

Vorzugsweise ist die Blende 9 durch einen Kreis 11 begrenzt, dessen Mittelpunkt M bezogen auf die Achse 10 des axialen Strömungsteiles 2 in Richtung auf den radialen Einlauf 4 des Ansaugschachtes 1 verschoben ist. Dadurch entsteht zwischen der Eintrittskante 7 des Mantels 6 und dem äußeren Rand der Blende 9 ein Überhang. Dieser Überhang ist auf der dem radialen Einlauf 4 zugewandten Seite der Blende 9 mit dem Wert a am größten und auf der dem Einlauf 4 abgewandten Seite mit dem Wert b am geringsten.

Die Blende 9 kann anstelle eines Kreises 11 auch durch eine andere in sich geschlossene geometrische Figur mit nur einer Symmetrieachse ersetzt werden. Diese geometrische Figur kann die Form einer Ellipse 12 aufweisen oder eiförmig sein. Die einzige Symmetrieachse der geometrischen Figur ist senkrecht zur Achse 10 des axialen Strömungsteiles 2 ausgerichtet. Auch in diesem Fall besteht ein Überhang, der auf der dem radialen Einlauf 4 zugewandten Seite der Blende 9 größer ist als auf der dem Einlauf 4 abgewandten Seite.

## Patentansprüche

1. Einströmgehäuse für axiale Strömungsmaschinen, insbesondere für Axialkompressoren, bestehend aus einem Ansaugschacht (1) mit einem einseitigen, radialen Einlauf (4) und einem axialen rotationssymmetrischen Einlaufkonus (5), der zusammen mit einem mit einer Eintrittskante (7) in den Ansaugschacht (1) hineinragenden Mantel (6) einen axialen Strömungsteil (2) bildet, das mit dem Eintrittsquerschnitt der Strömungsmaschine in Verbindung steht, **dadurch gekennzeichnet, dass** die Eintrittskante (7) des Mantels (6) mit einer ringförmiges Blende (9) verbunden ist, die senkrecht zur Achse (10) des axialen Strömungsteiles (2) ausgerichtet ist, und dass die Blende (9) senkrecht zur Achse (10) des axialen Strömungsteiles (2) spiegelsymmetrisch und zur Achse (10) des axialen Strömungsteiles (2) unsymmetrisch ist, wobei zwischen der Außenkante der Blende (9) und der Eintrittskante (7) des Mantels (6) ein Überhang besteht, der auf der dem radialen Einlauf (4) zugewandten Seite der Blende (9) größer ist als auf der dem Einlauf (4) abgewandten Seite.

2. Einströmgehäuse nach Anspruch 1, **dadurch gekennzeichnet, dass** die Blende (9) außen durch einen Kreis (11) begrenzt ist, dessen Mittelpunkt (M) gegenüber der Achse (10) des axialen Strömungsteiles (2) in Richtung auf den radialen Einlauf (4) verschoben ist.

3. Einströmgehäuse nach Anspruch 1, **dadurch gekennzeichnet, dass** die Blende (9) außen durch eine in sich geschlossene, nur eine Symmetrieachse aufweisende geometrische Figur begrenzt ist und dass die Symmetrieachse senkrecht zur Achse (10) des axialen Strömungsteiles (2) verläuft.

4. Einströmgehäuse nach Anspruch 3, **dadurch gekennzeichnet, dass** die Blende (9) außen durch eine Ellipse (12) begrenzt ist.

## Claims

1. Inflow housing for axial fluid-flow machines, particularly for axial compressors, consisting of an intake shaft (1) with a radial inlet (4) at one end and an axial rotationally symmetrical inlet cone (5) which together with a casing (6) projecting by an entry edge (7) into the intake shaft (1) forms an axial flow part (2), which is connected with the entry cross-section of the fluid-flow machine, **characterised in that** the entry edge (7) of the casing (6) is connected with an annular orifice plate (9) oriented perpendicularly to the axis (10) of the axial flow part (2) and that the orifice plate (9) is mirror-symmetrical perpendicularly to the axis (10) of the axial flow part (2) and is asymmetrical with respect to the axis (10) of the axial flow part (2), wherein present between the outer edge of the orifice plate (9) and the entry edge (7) of the casing (6) is an overhang which is larger on the side, which faces the radial inlet (4) of the orifice plate (9), than on the side remote from the inlet (4).

2. Inflow housing according to claim 1, **characterised in that** the orifice plate (9) is bounded outwardly by a circle (11), the centre point (M) of which is displaced relative to the axis (10) of the axial flow part (2) in direction towards the radial inlet (4).

3. Inflow housing according to claim 1, **characterised in that** the orifice plate (9) is bounded outwardly by a geometric figure which is closed in itself and has only one axis of symmetry and that the axis of symmetry extends perpendicularly to the axis (10) of the axial flow part (2).

4. Inflow housing according to claim 3, **characterised in that** the orifice plate (9) is bounded outwardly by an ellipse (12).

## Revendications

1. Carter d'admission pour turbomachines axiales, en particulier pour compresseurs axiaux, constitué d'une gaine d'aspiration (1) avec une admission radiale (4), unilatérale, et d'un cône d'admission (5) axial, à symétrie de révolution, qui forme avec une enveloppe (6), pénétrant par un bord d'entrée (7) dans la gaine d'aspiration (1), une partie d'écoulement axiale (2) en liaison avec la section transversale d'entrée de la turbomachine, **caractérisé en ce que** le bord d'entrée (7) de l'enveloppe (6) est assemblé avec un obturateur (9) annulaire, orienté perpendiculairement à l'axe (10) de la partie d'écoulement axiale (2), et que l'obturateur (9) est symétrique perpendiculairement à l'axe (10) de la partie d'écoulement axiale (2) et asymétrique par rapport à l'axe (10) de la partie d'écoulement axiale (2), un porte-à-faux existant alors entre le bord extérieur de l'obturateur (9) et le bord d'entrée (7) de l'enveloppe (6), lequel porte-à-faux est plus grand sur le côté de l'obturateur (9), tourné vers l'admission radiale (4), que sur le côté opposé à l'admission (4).

2. Carter d'admission suivant la revendication 1, **caractérisé en ce que** l'obturateur (9) est délimité extérieurement par un cercle (11), dont le centre (M) est déplacé par rapport à l'axe (10) de la partie d'écoulement axiale (2) en direction de l'admission radiale (4).

3. Carter d'admission suivant la revendication 1, **caractérisé en ce que** l'obturateur (9) est délimité extérieurement par une figure géométrique fermée en soi, qui ne présente qu'un axe de symétrie, et que l'axe de symétrie s'étend perpendiculairement à l'axe (10) de la partie d'écoulement axiale (2).

4. Carter d'admission suivant la revendication 3, **caractérisé en ce que** l'obturateur (9) est délimité extérieurement par une ellipse (12).
